# EUROPÄISCHE PATENTSCHRIFT

(11) **EP 0 198 442 B1**
(45) Veröffentlichungstag und Bekanntmachung des Hinweises auf die Patenterteilung: **29.06.1994**
(21) Anmeldenummer: 86104995.5
(22) Anmeldetag: 11.04.1986
(51) Int. Cl.: G02B 6/44

(54) **Lichtwellenleiter**
Optical fibre
Fibre optique

(30) Priorität: 16.04.1985 DE 3513592
(43) Veröffentlichungstag der Anmeldung: 22.10.1986
(73) Patentinhaber: KABEL RHEYDT Aktiengesellschaft, D-41179 Mönchengladbach (DE)
(72) Erfinder: Parmar, Daljit, Dipl.-Ing., D-4300 Essen 1 (DE); Borzym, Werner, D-5060 Bergisch Gladbach 2 (DE)
(74) Vertreter: Mende, Eberhard, Dipl.-Ing.

(56) Entgegenhaltungen:
- EP-A- 0 129 372
- DE-A- 2 604 307
- DE-A- 2 741 153
- DE-A- 2 929 903
- GB-A- 1 438 074
- GB-A- 2 106 663
- US-A- 4 078 853
- PATENT ABSTRACTS OF JAPAN, Band 6, Nr. 84 (P-117)[962], 22. Mai 1982; JP-A-57 20 701
- PATENT ABSTRACTS OF JAPAN, Band 8, Nr. 65 (P-263)[1502], 27 März 1984; JP-A-58 211 705
- KUNSTSTOFFE 76 (1986), W.FRANK: "Polymere Überzüge für Lichtwellenleiter", Seite 360
- PLASTICS AND RUBBER INTERNATIONAL, Band 5, Nr. 4, August 1980, W.E.SIMPSON: "Plastics in fibre optical cables", Seiten 145-149

## Beschreibung

Die Erfindung betrifft einen Lichtwellenleiter mit einem Grundkörper und mit mehreren Schichten auf diesem Grundkörper. Lichtwellenleiter sind optische Fasern, die zur Übertragung von Licht im infraroten, sichtbaren, ultravioletten Bereich oder in einem Teil dieser Bereiche zu nachrichtentechnischen Zwecken geeignet sind. Diese optischen Fasern bestehen aus Quarzglas mit einem geeigneten Dotierungsprofil. Die optische Faser kann zum Schutz ihrer Oberfläche mit einer oder mehreren Schutzschichten, z. B. aus Kunststoff, versehen sein. Optische Fasern sind mechanisch sehr empfindlich. Zu ihrer Weiterverarbeitung oder Verlegung werden sie daher mit weiteren Schutzhüllen versehen, die sie vor äußeren mechanischen Kräften schützen. Eine optische Faser oder die zum Zwecke der weiteren Verarbeitung zu einem Kabel oder zwecks Anwendung als einzelner Lichtwellenleiter mit Schutzhüllen versehen ist, wird im vorliegenden Zusammenhang als Lichtwellenleiter bezeichnet.

Es sind Lichtwellenleiter bekannt, bei denen die optischen Fasern zum Schutz vor mechanischen Belastungen lose in hohlzylindrischen Schutzhüllen in Gestalt stabiler einschichtiger Schläuche liegen (DE-OS 26 04 307). Mehrere Lichtwellenleiter dieser Art sind zu einem optischen Kabel zusammengefaßt. Da optische Fasern insbesondere vor Zugbeanspruchungen zu schützen sind, sind in den bekannten optischen Kabeln Zugentlastungselemente vorgesehen, die zumeist in den Zwickelräumen untergebracht sind. Aus der GB-PS 1 438 074 ist eine Lichtleiteranordnung bekannt, bei der die optischen Fasern lose in einer mehrschichtigen Schutzhülle liegen. Die Fasern sind dabei lose von einem zum Rohr geformten Gewebeband oder einer Kunststoffolie umgeben. Darüber wird noch ein glasfaserverstärkter Kunststoffmantel extrudiert.

Da die optische Faser nach der Herstellung eine geringe Zerreißfestigkeit aufweist, wird sie mit einem Oberflächenschutz versehen. Dieser Oberflächenschutz besteht zumeist aus zwei Schichten, wobei der Gesamtdurchmesser am Ende dieser Beschichtung etwa 0,25 mm beträgt. Die Einzelfasern werden zu ihrer Identifizierung mit Farbsymbolen versehen. Obwohl durch die Oberflächenbeschichtung eine deutliche Steigerung der Zerreißfestigkeit erzielt wird, sind die Fasern in der Produktion nur äußerst vorsichtig und aufwendig zu handhaben. Auch nach dem Einbau der Fasern in eine schützende Kabelhülle sind die Probleme nicht kleiner geworden. Bei im Extremfall auftretenden Temperaturen von minus 30^{o}C bis plus 70^{o}C können Längenunterschiede zwischen Faser und sonstigen Aufbauelementen von etwa plus/minus 1 % vorkommen (Quarzfaser in PE-Umgebung). Im Falle einer Dehnung des Kabels bei hohen Temperaturen kann bereits die Zerreißdehnung der Fasern überschritten sein, was zum Faserbruch führt und damit das Kabel funktionsunfähig macht; bei Stauchung können unter bestimmten Umständen durch Ausbiegung der Faser in Krümmungen kleiner Radien - sog. Mikrokrümmungen - hohe Zusatzverluste entstehen. Deshalb ist es bisher üblich, die Lichtwellenleiterfasern nach der Beschichtung mit dem Oberflächenschutz lose in Schutzhüllen, beispielsweise aus Polyethylen, einzubetten. Dehnungen und Stauchungen des Kabels und der Schutzhülle können daher auf die Faser nicht direkt einwirken. Allerdings hat diese Lösung den gravierenden Nachteil, daß Wasser in den längslaufenden Hohlraum in der Faserhülle eindringen kann. Zur Erzielung einer Längswasserdichtigkeit wird beispielsweise der Hohlraum mit einer pastösen Substanz ausgefüllt. Eine Ausfüllung der Hohlräume mit einer sich verfestigenden Substanz ist wegen der Gefahr der Mikrokrümmungen nicht möglich.

Der Erfindung liegt die Aufgabe zugrunde, einen Lichtwellenleiter anzugeben, der mechanisch höher belastbar ist als bekannte Lichtwellenleiter und dessen Aufbau die Herstellung relativ dicker Schutzschichten ermöglicht.

Diese Aufgabe wird durch einen Lichtwellenleiter gemäß Anspruch 1 gelöst. gelöst.

Die die Wärme fernhaltende Schicht 3 und die den Grundkörper gegen Querkräfte schützende Schicht 4 haben möglichst den gleichen Ausdehnungskoeffizienten. Gemäß einer Weiterbildung der Erfindung ist auf die gegen Querkräfte schützende Schicht 4 eine Schicht aufgebracht, die Zugentlastungselemente enthält. Vorzugsweise weisen auch die die Wärme fernhaltende Schicht 3 und/oder die gegen Querkräfte schützende Schicht 4 Zugentlastungselemente auf. Als Zugentlastungselemente sind beispielsweise Glasrovings vorgesehen. Die oberste Schicht, die in einem Fall die gegen Querkräfte schützende Schicht 4 und im anderen Fall eine auf diese Schicht 4 aufgebrachte, Zugentlastungselemente enthaltende Schicht ist, ist vorzugsweise abriebfest ausgebildet, was durch entsprechende Härte der obersten Schicht erreicht wird.

Die die Wärme fernhaltende Schicht 3 und gegen Querkräfte schützende Schicht 4 weisen vorzugsweise eine Dicke von 0,15 mm bis 0,25 mm auf. Diejenige Schicht, die auf die gegen Querkräfte schützende Schicht 4 aufgebracht ist, weist vorzugsweise eine Dicke von 0,15 mm bis 0,3 mm auf.

Die Erfindung hat den Vorteil, daß zur Abdichtung der Hohlräume in der gemeinsamen Schutzhülle, in der die Lichtwellenleiter lose verlegt sind, auch quellfähige Substanzen verwendet werden können. Außerdem sind sie als Einzeladern problemlos zu handhaben und zu verlegen.

Die Erfindung wird im folgenden an einem Ausführungsbeispiel erläutert:

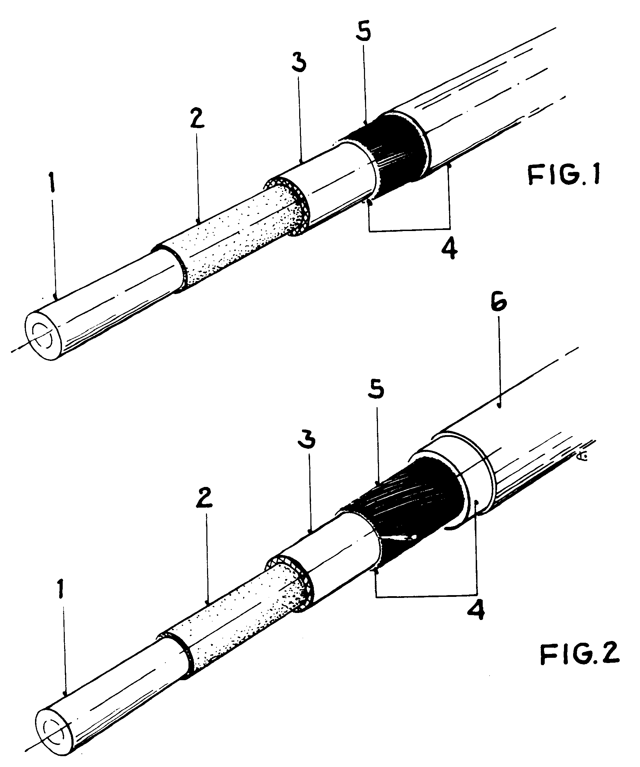

Die Fig. 1 zeigt einen Lichtwellenleiter nach der Erfindung. Der Lichtwellenleiter der Fig. 1 weist einen zylindrischen Grundkörper 1 auf, der aus Quarz besteht. Auf diesen Grundkörper 1 ist eine Lackschicht 2 aufgebracht. Da der Grundkörper 1 sehr empfindlich ist und keine ausreichende Bruchfestigkeit besitzt. ist auf den Grundkörper 1 gemäß der Fig.1 eine Lackschicht 2 aufgebracht, die aus mehreren, UV-härtbaren Lackschichten besteht. Auf die Lackschicht 2 ist gemäß der Fig. 1 eine Schicht 3 aufgebracht, die die Aufgabe hat, die Lackschicht 2 vor Wärme zu schützen, die beim Aufbringen der nachfolgenden Schicht 4, die durch Extrusion aufgebracht wird, entsteht. Durch die Wärmeschutzschicht 3 kann natürlich nicht verhindert werden, daß eine gewisse Wärme an die Lackschicht 2 gelangt, doch kann die Wärmeschutzschicht 3 verhindern, daß die Wärme, die beim Extrudieren der Schicht 4 entsteht, die Lackschicht 2 zerstört. Die Wärmeschutzschicht 3 wird zwar ebenfalls vorzugsweise durch Extrudieren aufgebracht, aber bei einer wesentlich niedrigeren Temperatur, so daß bei einem Extrudieren der Wärmeschutzschicht 3 ohne entsprechende Zwischenschicht keine Gefahr für die Lackschicht 2 besteht. Nach der Fig. 1 ist auf die Wärmeschutzschicht 3 eine Schicht 4 aufgebracht, die die Aufgabe hat, den Grundkörper 1 gegen Querkräfte, die auf die Lichtleiter einwirken, zu schützen. In die Schicht 4 sind gemäß der Fig. 1 Glasrovings 5 als Zugentlastungselemente eingelagert.

Die Fig. 2 unterscheidet sich von der Fig. 1 dadurch, daß bei dem dort dargestellten Aderaufbau auf die Schicht 4 eine Schicht 6 aufgebracht ist, die so hart ausgebildet ist, daß sie abriebfest ist.

Die Lackschicht 2 besteht aus UV-härtbarem Lack. Die Schicht 3 besteht aus mittelmolekularem Polyethylen und weist eine Dicke von 0,15 mm auf. Die Schicht 4 besteht aus linearem Polyethylen niedriger Dichte (LLDPE). Die Dicke der Schicht 4 beträgt 0,2 mm. Die Schicht 6 besteht aus linearem Polyethylen der Dicke 0,1 mm. In eine der Schicht 3, 4 oder 6 sind Zugentlastungselemente aus Glasfasern eingelagert.

Gemäß einem weiteren Ausführungsbeispiel wird ein Glasfasergrundkörper 1, welche eine Monomode- oder Gradientenfaser sein kann, nach der Beschichtung mit UV-härtbarem Lack 2 mit einer Schicht 3 aus mittelmolekularem Polyethylen niedriger Dichte versehen (s. Fig. 2). Die Wandstärke dieser Wärmeschutzschicht beträgt etwa 0,15 mm. Über dieser bei 130^{o} C bis 150^{o} C extrudierbaren Schicht wird die bei über 200^{o} C extrudierbare mechanische Schutzschicht 4 aufgebracht. Für diese Schutzschicht wird ein Material mit hohem Elastizitätsmodul und mit möglichst gleichem Ausdehungskoeffizienten wie die Wärmeschutzschicht, vorzugsweise einem linearen Polyethylen niedriger Dichte (LLDPE) verwendet. Diese Schicht hat eine Stärke von etwa 0,2 mm. Zu dieser Schicht sind längslaufende Glasfasern 5 als Zugentlastungselemente angeordnet. Als abriebfeste Oberflächenschutzschicht 6 findet lineares Polyethylen von etwa 0,1 mm Stärke Verwendung. In dieser Schicht ist auch die Farbcodierung zur Unterscheidung einzelner Fasern angebracht.

## Patentansprüche

1. Lichtwellenleiter aus einem Grundkörper aus Glas, der von mehreren Lackschichten umgeben ist, dadurch gekennzeichnet, daß auf die äußerste Lackschicht (2) eine Schicht (3) aus mittelmolekularem Polyethylen niedriger Dichte extrudiert ist, die Wärme von den Lackschichten fernhält, die beim Aufbringen der nachfolgenden Schicht entsteht, und daß auf die die Wärme fernhaltende Schicht (3) eine Schicht (4) durch Extrusion aufgebracht ist, die den Grundkörper gegen Querkräfte schützt.

2. Lichtwellenleiter nach Anspruch 1, dadurch gekennzeichnet, daß die die Wärme fernhaltende Schicht (3) und die den Grundkörper gegen Querkräfte schützende Schicht (4) möglichst den gleichen Ausdehnungskoeffizienten haben.

3. Lichtwellenleiter nach einem der Ansprüche 1 bis 2, dadurch gekennzeichnet, daß auf die den Grundkörper gegen Querkräfte schützende Schicht (4) eine Schicht aufgebracht ist, die Zugentlastungselemente enthält.

4. Lichtwellenleiter nach einem der Ansprüche 1 bis 3, dadurch gekennzeichnet, daß die Wärme fernhaltende Schicht (3) und/oder die gegen Querkräfte schützende Schicht (4) Zugentlastungselemente (5) enthält.

5. Lichtwellenleiter nach einem der Ansprüche 1 bis 4, dadurch gekennzeichnet, daß als Zugentlastungselemente (5) Glasrovings vorgesehen sind.

6. Lichtwellenleiter nach einem der Ansprüche 1 bis 5, dadurch gekennzeichnet, daß die oberste Schicht (6) abriebfest ausgebildet ist.

7. Lichtwellenleiter nach einem der Ansprüche 1 bis 6, dadurch gekennzeichnet, daß die Wärme fernhaltende Schicht (3) und die gegen Querkräfte schützende Schicht (4) eine Dicke von 0,15 mm bis 0,25 mm aufweisen.

8. Lichtwellenleiter nach einem der Ansprüche 1 bis 7, dadurch gekennzeichnet, daß diejenige Schicht, die auf die gegen Querkräfte schützende Schicht (4) aufgebracht ist, eine Dicke von 0,15 mm bis 0,3 mm aufweist.

9. Lichtwellenleiter nach einem der Ansprüche 1 bis 8, dadurch gekennzeichnet, daß die gegen Querkräfte schützende Schicht (4) ein lineares Polyethylen niedriger Dichte aufweist.

## Claims

1. Optical waveguide comprising a basic body of glass which is surrounded by a plurality of coatings, characterized in that on the outermost coating (2) there is extruded a layer (3) of low-density polyethylene of medium molecular weight, which keeps away from the coatings heat which is produced when applying the following layer, and in that on the layer (3) keeping away heat there is applied by extrusion a layer (4) which protects the basic body against transverse forces.

2. Optical waveguide according to Claim 1, characterized in that the layer (3) keeping away heat and the layer (4) protecting the basic body against transverse forces have as far as possible the same coefficient of expansion.

3. Optical waveguide according to one of Claims 1 or 2, characterized in that on the layer (4) protecting the basic body against transverse forces there is applied a layer which contains stress relief elements.

4. Optical waveguide according to one of Claims 1 to 3, characterized in that the layer (3) keeping away heat and/or the layer (4) protecting against transverse forces contains stress relief elements (5).

5. Optical waveguide according to one of Claims 1 to 4, characterized in that glass rovings are provided as stress relief elements (5).

6. Optical waveguide according to one of Claims 1 to 5, characterized in that the uppermost layer (6) is of an abrasion-resistant design.

7. Optical waveguide according to one of Claims 1 to 6, characterized in that the layer (3) keeping away heat and the layer (4) protecting against transverse forces have a thickness of 0.15 mm to 0.25 mm.

8. Optical waveguide according to one of Claims 1 to 7, characterized in that that layer which is applied to the layer (4) protecting against transverse forces has a thickness of 0.15 mm to 0.3 mm.

9. Optical waveguide according to one of Claims 1 to 8, characterized in that the layer (4) protecting against transverse forces has a low-density linear polyethylene.

## Revendications

1. Fibre optique constituée d'un corps de base de verre entourée de plusieurs couches de vernis caractérisée en ce que sur la couche de vernis (2) extérieure est extrudée une couche (3) en polyéthylène de moyen poids moléculaire de plus faible densité qui isole les couches de vernis de la chaleur qui est produite lors du dépôt de la couche suivante et en ce que sur la couche (3) isolant de la chaleur est déposée une couche (4) par extrusion qui protège le corps de base contre les efforts de cisaillement.

2. Fibre optique selon la revendication 1, caractérisée en ce que la couche (3) isolant de la chaleur et la couche (4) protégeant le corps de base contre les efforts de cisaillement ont autant que possible le même coefficient de dilatation.

3. Fibre optique selon l'une des revendications 1 ou 2, caractérisée en ce que la couche (4) protégeant le corps de base contre les efforts de cisaillement est déposée une couche qui comporte des élément résistant à la traction.

4. Fibre optique selon l'une des revendications 1 à 3 caractérisée en ce que la couche (3) de la chaleur (3) et/ou la couche (4) protégeant contre les efforts de cisaillement comporte des éléments (5) résistant à la traction.

5. Fibre optique selon l'une des revendications 1 à 4, caractérisée en ce que les éléments (5) résistant à la traction sont pourvus de verre textile.

6. Fibre optique selon l'une des revendications 1 à 5, caractérisée en ce que la couche la plus extérieure (6) est résistante à l'abrasion.

7. Fibre optique selon l'une des revendications 1 à 6, caractérisée en ce que la couche (3) isolant de la chaleur et la couche (4) protégeant contre les efforts de cisaillement présentent une épaisseur de 0,15mm à 0,25mm.

8. Fibre optique selon l'une des revendications 1 à 7, caractérisée en ce que la couche qui est déposée sur la couche (4) protégeant contre les efforts de cisaillement présente une épaisseur de 0,15mm à 0,3mm.

9. Fibre optique selon l'une des revendications 1 à 8, caractérisée en ce que la couche (4) protégeant contre les efforts de cisaillement comporte un polyéthylène linéaire de plus faible densité.
